# EUROPEAN PATENT APPLICATION

(11) **EP 4 023 986 A1**
(43) Date of publication of application: **06.07.2022**
(21) Application number: 21213945.5
(22) Date of filing: 13.12.2021
(51) Int. Cl.: F27D 17/00, C03B 5/235, C03B 5/237, F28D 1/02, F28D 1/047, F28D 7/00, F28D 7/08, F28D 7/10, F28D 15/00, F28D 21/00, F28F 1/00, F28F 3/00, F28F 27/00, F27D 9/00

(54) **HIGH-TEMPERATURE FLUID TRANSPORTING PIPELINE WITH PIPELINE CASING FORMED BY HEAT EXCHANGE APPARATUS, SUITABLE HEAT EXCHANGE APPARATUS AND HEAT EXCHANGE METHOD**

(30) Priority: 29.12.2020 CN 202011593639
(71) Applicant: L'Air Liquide, Société Anonyme pour l'Etude et l'Exploitation des Procédés Georges Claude, 75007 Paris (FR)
(72) Inventor: GU, Yuquan, Shanghai, 200233 (CN); VAN KAMPEN, Peter, Shanghai, 200233 (CN); WANG, KuoHsuan, Shanghai, 200233 (CN)
(74) Representative: Air Liquide

(57) **Abstract**

A transporting pipeline for a high-temperature fluid, the transporting pipeline integrating a heat exchange apparatus, wherein heat contained in the high-temperature fluid can be recovered during the transportation thereof. The heat exchange apparatus comprises a hermetic heat exchange cavity 20, and a coil 12 for a heat-recovering fluid installed therein, as well as a method of heat exchange, whereby the high-temperature fluid heats an auxiliary fluid in the cavity 20 via a heat exchange base plate 1 of the heat exchange cavity 20 in contact therewith, and the heated auxiliary fluid then conducts the heat to the heat-recovering fluid in the coil 12, the high-temperature fluid being, for example, flue gas generated by combustion, an upper part of a flue gas transporting pipeline being replaced by the heat exchange apparatus of the present invention, the auxiliary fluid being an inert gas such as air, and the air heated by the high-temperature flue gas conducting heat to fuel and/or oxygen-enriched gas (as an oxidant/combustion aid) flowing in the coil 12.

## Description

### Technical Field

The present invention relates to the field of heat recovery from a high-temperature fluid, in particular to the recovery of heat from hot flue gas of a glassmelting furnace for the purpose of heating a fuel and/or an oxygen-enriched gas.

### Background Art

Protecting the environment, saving energy, conserving land and reducing costs are issues of concern in modern industrial development. Various technical processes such as metallurgy, glass melting and industrial chemical production need to consume large amounts of energy, at the same time generating products or by-products containing large amounts of thermal energy. For example, flue gas or steam generated during combustion, syngas and steam generated by natural gas reforming, etc. are all high-temperature fluids containing large amounts of thermal energy. If the thermal energy in these high-temperature fluids cannot be recovered, the result will be considerable wastage of energy and production efficiency.

Taking plate glass production as an example, in the prior art, many kilns operate via oxygen-enriched combustion, and this means that combustion no longer takes place between fuel and air (air combustion) but instead takes place between fuel and oxygen-enriched gas with a higher oxygen concentration than air. Using exhaust gas from combustion products, i.e. flue gas, to preheat the fuel and/or oxygen-enriched gas enables the recovery of some of the energy contained in the flue gas, and can also increase the energy efficiency of such combustion. In the case of oxygen-enriched combustion, the energy contained in flue gas accounts for 30% of the energy consumed.

CN100575788C disclosed an indirect heat exchanger. In a heat exchange region, hot flue gas heats an inert gas contained in a hermetic apparatus first, then the hot inert gas further heats a combustion gas located in another of the airtight apparatuses. This design requires the addition of a new heat exchange region outside an existing flue gas pipeline of the factory; because the amount of space occupied is increased, the cost of investment is increased, so this design is not widely applied in practice.

### Summary of the Invention

An object of the present invention is to overcome the shortcomings of the prior art, modifying an existing horizontally arranged high-temperature fluid pipeline, e.g. a flue gas pipeline, in a factory so as to integrate a heat exchange apparatus with the pipeline, thus achieving the technical effects of recovering thermal energy to the maximum extent, saving space and reducing cost input.

In one aspect, the present invention provides a high-temperature fluid transporting pipeline, wherein at least a part of a casing thereof is formed by a heat exchange apparatus.

The heat exchange apparatus comprises a heat exchange base plate in contact with the high-temperature fluid and a thermal isolation layer in contact with an external environment, the thermal isolation layer being connected to the heat exchange base plate by two end faces and two weight-bearing plates, wherein the heat exchange base plate, thermal isolation layer, end faces and weight-bearing plates enclose a hermetic heat exchange cavity, a coil for a heat-recovering fluid being installed in the heat exchange cavity, and the two end faces being parallel.

Optionally, the thermal isolation layer of the heat exchange apparatus comprises an inner layer and an outer layer, and the inner wall of the thermal isolation layer at least partially comprises a heat-reflecting plate. A thermal isolation material is packed between the inner and outer walls of the thermal isolation layer or a vacuum is maintained therebetween, the thermal isolation material comprising insulation wool and/or perlite. A heat-recovering fluid inlet and a heat-recovering fluid outlet are provided on an outer wall of the thermal isolation layer, the heat-recovering fluid inlet being sequentially in communication with a heat-recovering fluid inlet distributor located inside the heat exchange accommodating cavity and an inlet of the heat-recovering fluid coil, and the heat-recovering fluid outlet being sequentially in communication with a heat-recovering fluid outlet distributor located inside the heat exchange cavity and an outlet of the coil. Optionally, a temperature sensor is provided on a heat-recovering fluid outlet pipeline and/or the heat-recovering fluid outlet distributor.

The outer wall of the thermal isolation layer is further provided with an auxiliary fluid inlet and an auxiliary fluid outlet, each being in communication with the heat exchange cavity. A gas component analyser is provided at the auxiliary fluid outlet, for the purpose of ensuring that there is no leakage of heat-recovering fluid in the heat exchange cavity.

Optionally, the heat exchange plate is an arch or has multiple undulations. The transporting pipeline is arranged horizontally, the casing of the transporting pipeline comprises a refractory layer at a lower half and the heat exchange apparatus at an upper half, the weight-bearing plates of the heat exchange apparatus are pressed tightly against the refractory layer under the action of gravity, and a sealing refractory material is used for sealing between the weight-bearing plates and the refractory layer. When the heat exchange base plate is undulating, a supporting structure is provided between the heat exchange base plate and the weight-bearing plates. The sealing refractory material comprises one of ceramic fiber, glass fiber and refractory mortar, or a combination of more than one thereof.

Optionally, the materials of the heat exchange base plate, the inner and outer walls of the thermal isolation layer, the heat-reflecting plate, the end faces, the weight-bearing plates and the coil comprise stainless steel and/or aluminium.

Optionally, a number of heat exchange apparatuses are arranged in the axial direction of the transporting pipeline, with the end faces of the heat exchange apparatuses being tightly arranged against each other, and a sealing refractory material being used for sealing between the end faces.

Optionally, in the high-temperature fluid transporting pipeline, the heat-recovering fluid flows in the coil, the auxiliary fluid flows or is stationary in the heat exchange cavity, and the heat-recovering fluid is heated by the high-temperature fluid through heat conduction by the auxiliary fluid and heat radiation by the heat exchange base plate.

In the present context, a high-temperature fluid is understood to refer to a fluid having a temperature higher than that of the heat-recovering fluid, so that heat from the high-temperature fluid may be used for heating the heat-recovering fluid.

Optionally, in the high-temperature fluid transporting pipeline, the high-temperature fluid is or comprises flue gas generated by combustion and/or thermal cracking, the auxiliary fluid is or comprises one of air, N₂, CO₂ and steam or a combination of more than one thereof, and the heat-recovering fluid is or comprises O₂, natural gas or other fuel gases.

In another aspect, the present invention further discloses a heat exchange apparatus suitable for the high-temperature fluid transporting pipeline as described above, characterized in that the heat exchange apparatus comprises a heat exchange base plate in contact with the high-temperature fluid and a thermal isolation layer in contact with an external environment, the thermal isolation layer being connected to the heat exchange base plate by two end faces and two weight-bearing plates, wherein the heat exchange base plate, thermal isolation layer, end faces and weight-bearing plates enclose a hermetic heat exchange cavity, a heat-recovering fluid coil being installed in the heat exchange cavity.

Optionally, the two end faces of the heat exchange apparatus are parallel.

Optionally, the thermal isolation layer of the heat exchange apparatus comprises an inner layer and an outer layer, and the inner wall of the thermal isolation layer at least partially comprises a heat-reflecting plate. A thermal isolation material is packed between the inner and outer walls of the thermal isolation layer or a vacuum is maintained therebetween, the thermal isolation material comprising insulation wool and/or perlite.

Optionally, the heat exchange base plate is an arch or has multiple undulations; when the heat exchange base plate has multiple undulations, a supporting structure is provided between the heat exchange base plate and the weight-bearing plates.

Optionally, in the heat exchange apparatus, the materials of the heat exchange base plate, the inner and outer walls of the thermal isolation layer, the heat-reflecting plate, the end faces, the weight-bearing plates and the coil comprise stainless steel and/or aluminium.

In another aspect, the present invention further discloses a heat exchange method, characterized in that at least a part of a casing of the transporting pipeline is formed by a heat exchange apparatus, the heat exchange apparatus comprising a heat exchange base plate in contact with the high-temperature fluid and a thermal isolation layer in contact with an external environment, the thermal isolation layer being connected to the heat exchange base plate by two end faces and two weight-bearing plates, wherein the heat exchange base plate, thermal isolation layer, end faces and weight-bearing plates enclose a hermetic heat exchange cavity, a heat-recovering fluid coil being installed in the heat exchange cavity; a heat-recovering fluid flows in the coil, an auxiliary fluid flows or is stationary in the heat exchange cavity, and the heat-recovering fluid is heated by the high-temperature fluid through heat conduction by the auxiliary fluid and heat radiation by the heat exchange base plate.

Optionally, the high-temperature fluid is or comprises smoke generated by combustion and/or thermal cracking. The auxiliary fluid is or comprises one of air, N₂, CO₂ and steam or a combination of more than one thereof, and the heat-recovering fluid is or comprises O₂, natural gas or another fuel gas.

Optionally, the temperature range of the flue gas is 500 - 1200°C, and the outlet temperature range of the heat-recovering fluid, i.e. the temperature range of the heated heat-recovering fluid, is 300 - 600°C. The range of flow rates of the heat-recovering fluid is 5 - 100 m/s, preferably 20 - 60 m/s; and the range of flow rates of the auxiliary fluid is 0 - 50 m/s, preferably 20 - 30 m/s.

The use of the technical solution of the present invention will produce several beneficial technical effects.

Firstly, the design of the heat exchange apparatus in the present invention makes the modification of an existing transporting pipeline and the installation of the new apparatus very convenient, and can increase the heat exchange area while reducing costs, thus increasing the heat exchange efficiency.

Secondly, multiple heat exchange apparatuses can be installed in parallel, and the multiple heat exchange apparatuses can heat the same type of heat-recovering fluid, or different heat-recovering fluids.

Thirdly, the heat exchange apparatus employs a method of indirect heating, and the use of the auxiliary fluid, temperature sensor and gas component analyser, etc. increases the safety and controllability of the heat exchange apparatus.

### Brief description of the drawings

The drawings in the present disclosure merely serve to illustrate the present invention, such that the spirit of the present invention can be understood and explained, but do not limit the present invention in any respect.

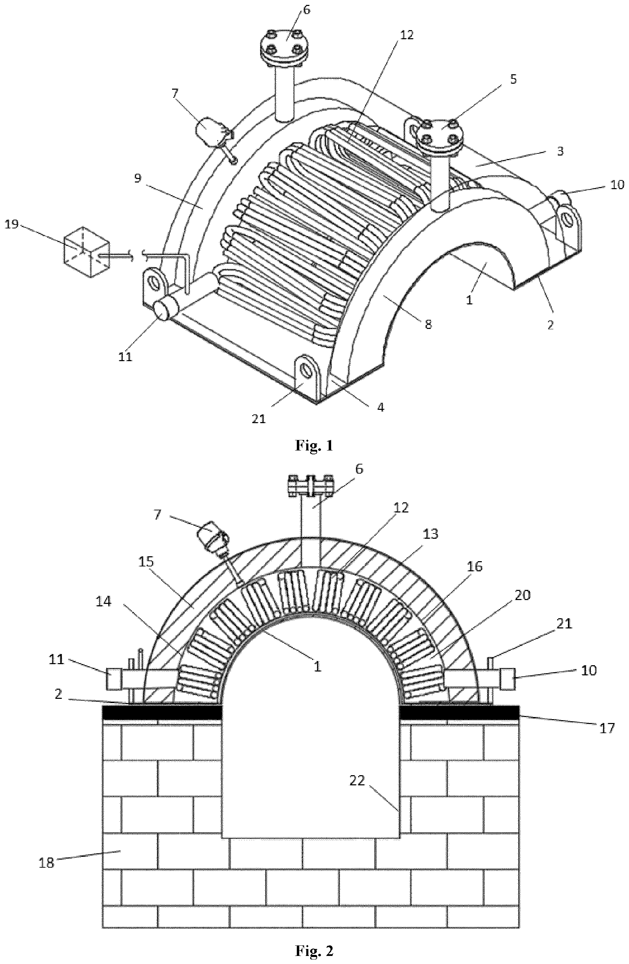

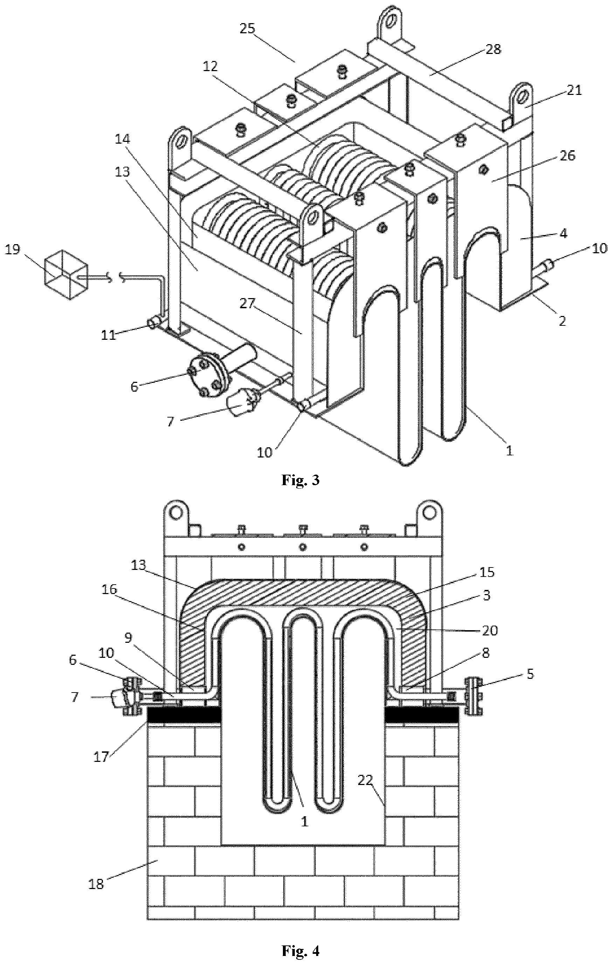

Figs. 1 - 4 are two embodiments according to the present invention, wherein identical references represent corresponding parts in the four figures. Figs. 1 and 3 are three-dimensional structural drawings of the relevant embodiments; Figs. 2 and 4 are sectional drawings of the relevant embodiments after installation on the high-temperature fluid transporting pipeline.

The references in the drawings are as follows: 1 - heat exchange base plate, 2 - weight-bearing plate, 3 - thermal isolation layer, 4 - end face, 5 - heat-recovering fluid inlet, 6 - heat-recovering fluid outlet, 7 - temperature sensor, 8 - heat-recovering fluid inlet distributor, 9 - heat-recovering fluid outlet distributor, 10 - auxiliary fluid inlet, 11 - auxiliary fluid outlet, 12 - heat-recovering coil, 13 - thermal isolation layer outer wall, 14 - thermal isolation layer inner wall, 15 - thermal isolation material, 16 - heat-reflecting plate, 17 - sealing refractory material, 18 - refractory bricks, 19 - gas component analyser, 20 - heat exchange cavity, 21 - hoisting lug, 22 - transporting pipeline casing, 25 - supporting frame, 26 - supporting arm, 27 - supporting column, 28 - crossbeam.

### Detailed description of the invention

In the present invention, it should be understood that orientational or positional relationships indicated by terms such as "up", "down", "front", "rear", "perpendicular", "parallel", "top", "bottom", "inner" and "outer" are based on the orientational or positional relationships shown in the drawings, and use a horizontal plane as a reference.

Unless otherwise stated, qualifiers similar to "a" appearing herein do not indicate a definition of quantity, but describe technical features distinguished from one another. Similarly, modifiers similar to "about" and "approximately" appearing in front of numerals herein generally include the number itself, and the specific meaning thereof should be understood in conjunction with the meaning of the context. Unless modified by a specific quantifying measure word, nouns herein should be regarded as including both singular and plural forms, i.e. the technical solution may include a single one of the technical feature concerned, but may also include a plurality of the technical feature.

In the present invention, unless otherwise clearly specified and defined, terms such as "installed", "connected together", "connected" and "in communication" should be understood in a broad sense, e.g. may mean connected in a fixed manner, but may also mean removably connected, or forming a single piece; may mean mechanically connected; may mean directly connected together, but may also mean connected indirectly via an intermediate medium; and may mean internal communication between two elements, or an interactive relationship between two elements. Those skilled in the art can understand the specific meaning of the above terms in the present invention according to the specific circumstances.

The high-temperature fluid in the present invention may have various forms and compositions, including gases as well as liquids; and may be a single component or a mixture. "High-temperature" means that the temperature thereof is higher than the temperature of the fluid being heated, with a range of variation of 100 - 1500°C. When the high-temperature fluid is a gas such as flue gas, the pipeline for transporting same is generally formed of refractory bricks; when the high-temperature fluid is a liquid, the casing of the pipeline for transporting same is often formed of metal. The present invention is suitable for the modification of various high-temperature fluid transporting pipelines arranged substantially horizontally. In the process of modification, a portion of the casing located above a horizontal plane through the central axis of the pipeline is replaced by an apparatus having a heat exchange function, i.e. the heat exchange apparatus of the present invention.

As shown in Fig. 1, the heat exchange apparatus of the present invention is enclosed by at least six faces: a heat exchange base plate 1 in contact with the high-temperature fluid and a thermal isolation layer 3 in contact with the external environment, with the heat exchange base plate and thermal isolation layer being connected to each other via two end faces 4 and two weight-bearing plates 2. The abovementioned faces may be flat faces, curved faces, or faces that include turns, protrusions or depressions for the purpose of facilitating installation. Optionally, the heat exchange base plate 1 and the thermal isolation layer 3 are parallel to each other, the two end faces 4 are parallel to each other, and the two weight-bearing plates 2 are located in the same plane. The heat exchange base plate, thermal isolation layer, end faces and weight-bearing plates enclose a substantially hermetic (except for an outlet and inlet for each fluid) heat exchange cavity 20, and a heat-recovering fluid coil 12 is installed in the heat exchange cavity 20.

The thermal isolation layer 3 is a hollow structure comprising an inner wall 14 and an outer wall 13. A least a part of the thermal isolation layer inner wall 14 is formed by a heat-reflecting plate 16 or covered by the heat-reflecting plate 16. A cavity between the inner wall 14 and outer wall 13 of the thermal isolation layer may be evacuated, or may be filled with a thermal isolation material 15 comprising insulation wool and/or perlite, etc. Multiple fluid outlets/inlets are provided on the thermal isolation layer outer wall 13, including a heat-recovering fluid inlet 5, which is connected sequentially to a heat-recovering fluid inlet distributor 8 located in the heat exchange cavity and an inlet of the heat-recovering fluid coil 12; and also including a heat-recovering fluid outlet 6, which is connected sequentially to a heat-recovering fluid outlet distributor 9 located in the heat exchange cavity and an outlet of the heat-recovering fluid coil 12. Variables such as temperature and pressure of the heat-recovering fluid are important parameters in industrial production; for this reason, a measuring device such as a temperature sensor 7 and/or pressure sensor is provided on the heat-recovering fluid outlet distributor 9 or a heat-recovering fluid outlet pipeline connected to the heat-recovering fluid outlet 6. Outside the heat exchange apparatus, the heat-recovering fluid inlet 5 and outlet 6 are each connected to a heat-recovering fluid delivery system, optionally by means of a flange; the system comprises a valve capable of adjusting the flow rate of the heat-recovering fluid, a heat-recovering fluid controller, etc. (not shown in the figure). The heat-recovering fluid controller can receive a heat-recovering fluid outlet temperature and/or pressure measured by the measuring device, and on this basis can adjust the flow rate (or flow speed), temperature and pressure, etc. of the heat-recovering fluid.

An auxiliary fluid inlet 10 and an auxiliary fluid outlet 11 are also provided on the thermal isolation layer outer wall 13. Outside the heat exchange apparatus, the auxiliary fluid inlet 10 and outlet 11 are each connected to an auxiliary fluid delivery system, which comprises a valve capable of adjusting the flow rate of an auxiliary fluid, an auxiliary fluid controller, etc. (not shown in the figure). The auxiliary fluid flows within the heat exchange cavity 20, in a space outside the coil 12. The auxiliary fluid controller can also receive a heat-recovering fluid outlet temperature and/or pressure measured by the measuring device, and on this basis can adjust the flow rate (or flow speed), temperature and pressure, etc. of the auxiliary fluid.

The heat exchange apparatus of the present invention adopts a method of indirect heat exchange. High-temperature fluid in the transporting pipeline first heats the heat exchange base plate 1 by conduction, radiation and convection, etc.; the heat exchange base plate 1 then heats the auxiliary fluid in contact therewith by conduction and radiation, etc. The heated auxiliary fluid flows or is stationary around the heat-recovering fluid coil 12, and thus further conducts heat to the heat-recovering fluid in the coil. The use of the heat-reflecting plate 16 of the thermal isolation layer inner wall 14 and the thermal isolation material 15 retains heat inside the heat exchange cavity 20 as much as possible. When the heat-recovering fluid comprises a substance that is reactive, corrosive or otherwise dangerous at high temperatures, e.g. O₂, CH₄, etc., the use of indirect heat exchange greatly increases the safety of the heat exchange process. This is because inert air, steam, N₂ or CO₂, etc. can be chosen as the auxiliary fluid, and the heat exchange base plate 1 is not likely to suffer corrosion, aging or other damage when heated in an inert atmosphere, so safety incidents such as leakage will not occur. Stainless steel, aluminium or ceramic fiber can be chosen as the material of the heat exchange base plate, end faces and weight-bearing plates.

The choice of material for each part of the heat exchange apparatus of the present invention (including component composition, thickness, strength and finish, etc.) depends on the nature of the fluid in contact therewith and conditions such as temperature and pressure during use. For example, the heat exchange base plate 1 needs to have excellent thermal conduction properties, and can tolerate rapid variation of temperature within a large range. The weight-bearing plates 2 and end faces 4 need to have sufficient strength and tolerance to temperature variation. A tube wall of the heat-recovering fluid coil 12 not only needs to have good thermal conduction properties, but also must not react with the heat-recovering fluid within the range of temperatures that might be reached during operation. When the heat-recovering fluid is O₂ or an oxygen-enriched gas (i.e. a mixed gas with an oxygen content higher than the content of O₂ in air, optionally higher than 50%, and further higher than 80%), the material in contact therewith must not burn in a hot oxygen atmosphere, and is resistant to corrosion and oxidation.

The heat exchange efficiency of the heat exchange apparatus and the temperature of the heated fluid outlet can be regulated in various ways. When the temperature and flow rate of the high-temperature fluid in the pipeline remain substantially the same, if the flow rate and flow speed of the auxiliary fluid are increased, the temperature of the auxiliary fluid after being heated will fall, and correspondingly the outlet temperature of the heat-recovering fluid will also fall; if the auxiliary fluid is a gas, increasing the pressure thereof will cause the density thereof to increase, thereby increasing the heat transfer efficiency. Similarly, as long as other conditions remain unchanged, if the flow speed or flow rate of the heat-recovering fluid is increased, the outlet temperature thereof will also fall.

In order to prevent leakage due to corrosion or aging of the heat-recovering fluid coil 12 under heated conditions, a gas component analyser 19 is provided at the auxiliary fluid outlet 11; if the determined gas components are not the same as the components of the auxiliary fluid and the heat-recovering fluid content is increased, this indicates that the heat-recovering fluid coil has suffered damage or leakage. In this case, it is advisable to immediately stop using the heat exchange apparatus, and carry out maintenance.

In the case of an existing high-temperature fluid pipeline, for example a high-temperature flue gas pipeline formed of refractory bricks 18, when installing the heat exchange apparatus, the refractory bricks can first be removed from the upper half of the pipeline, and the heat exchange apparatus can then be hoisted to the proper position by means of hoisting lugs 21, with the weight-bearing plates 2 of the heat exchange apparatus pressed flat against the remaining part of the pipeline. A sealing refractory material 17, such as ceramic fiber, glass fiber or refractory mortar, etc., is used for sealing between the heat exchange apparatus and each contact face of the transporting pipeline. As required, multiple heat exchange apparatuses are installed on the pipeline with the end faces 4 thereof substantially parallel, and a refractory blanket is used for sealing between contact faces. The auxiliary fluids and heat-recovering fluids in the multiple heat exchange apparatuses can be the same or different.

Various forms can be chosen for the heat exchange base plate 1 of the heat exchange apparatus. As shown in Figs. 1 and 2, the heat exchange base plate 1 is substantially parallel to the thermal isolation layer 3, and both are arched, with two ends of the arch spanning a transporting pipeline casing 22. The arched design enables the weight of the heat exchange apparatus itself to be evenly distributed over the weight-bearing plates 2 at the bottom, so there is no need for an additional supporting structure. Figs. 3 and 4 disclose an undulating heat exchange base plate 1, i.e. the heat exchange base plate comprises a number of protruding parts which extend into the interior of the transporting pipeline, with the heat-recovering fluid coil 12 being arranged along these undulating protrusions; this design increases the area of contact between the heat exchange base plate and the high-temperature fluid in the transporting pipeline, so that heat conduction takes place more fully. However, since the weight of the undulating part cannot be effectively distributed over the weight-bearing plates 2 at the two ends, a supporting structure 25 needs to be used to transfer the weight of this part onto the weight-bearing plates. The supporting structure shown in Fig. 3 is a metal frame, having supporting arms 26 connected to the protruding undulations at the two end faces and supporting columns 27 connected to the weight-bearing plates. The supporting arms 26 and supporting columns 27 are connected by means of crossbeams 28.

As an example, a heat exchange apparatus according to Fig. 1 of the present invention is formed in the following manner. It is installed at an upper part of a transporting pipeline having an internal width of 0.6 m, the heat exchange base plate 1 having a heat exchange area of 0.75 m², and the heat-recovering fluid coil 12 having a total heat exchange area of 3.0 m². All of the metal elements in the heat exchange apparatus are formed of stainless steel (SS310) material. Experiments have proven that these materials will not burn or corrode under high-temperature pure oxygen conditions, so have a very high level of safety.

Flue gas generated by combustion is passed into the transporting pipeline, the main components of the flue gas being carbon dioxide, water, carbon monoxide, sulfur dioxide and nitrogen oxides, etc., with a range of temperature variation of 500 - 1200°C; the heat-recovering fluid is O₂, and it is expected that the temperature capable of being attained by the O₂ through heating will have a range of variation of 300 - 600°C; and air is chosen as the auxiliary fluid.

The flow rates, flow speeds and pressures, etc. of the heat-recovering fluid and auxiliary fluid are each controlled by controllers in their respective delivery systems. The range of variation of the flow speed of the heat-recovering fluid is 5 - 100 m/s, preferably 20 - 60 m/s; the range of variation of the flow speed of the auxiliary fluid is 0 - 50 m/s, preferably 20 - 30 m/s.

Using CFD software to perform simulated calculations for the heat exchange apparatus in this example, when the temperature of the heat exchange base plate 1 is 850°C, the flow speed of air is 0.5 m/s and the flow speed of O₂ is 14 m/s, the O₂ entering the heat exchange apparatus at room temperature reaches a temperature of 500°C at the outlet.

In various technical processes involving oxygen-enriched combustion, for example in oxygen-enriched combustion in a glass melting furnace, if heated O₂ is delivered to the burner together with the fuel, a higher combustion temperature can be achieved while reducing the energy loss in flue gas, thus increasing the combustion efficiency and reducing the production of nitrogen oxides and dust.

The present invention is not limited to the illustrated examples and embodiments described; various equivalent modifications and substitutions made by those skilled in the art on the basis of this text shall be included in the scope defined by the claims of the present application.

## Claims

1. A transporting pipeline for a high-temperature fluid, **characterized in that** at least a part of a casing (22) of the transporting pipeline is formed by a heat exchange apparatus.

2. Transporting pipeline according to Claim 1, **characterized in that** the heat exchange apparatus comprises a heat exchange base plate (1) in contact with the high-temperature fluid and a thermal isolation layer (3) in contact with an external environment, the thermal isolation layer (3) being connected to the heat exchange base plate (1) by two end faces (4) and two weight-bearing plates (2), wherein the heat exchange base plate (1), thermal isolation layer (3), end faces (4) and weight-bearing plates (2) enclose a hermetic heat exchange cavity (20), a coil (12) for a heat-recovering fluid being installed in the heat exchange cavity (20).

3. Transporting pipeline according to Claim 2, **characterized in that** a heat-recovering fluid inlet (5) and a heat-recovering fluid outlet (6) are provided on an outer wall (13) of the thermal isolation layer (3), the heat-recovering fluid inlet (5) being sequentially in communication with a heat-recovering fluid inlet distributor (8) located inside the heat exchange cavity (20) and an inlet of the coil (12), and the heat-recovering fluid outlet (6) being sequentially in communication with a heat-recovering fluid outlet distributor (9) located inside the heat exchange cavity (20) and an outlet of the coil (12).

4. Transporting pipeline according to Claim 2 or 3, **characterized in that** the outer wall (13) of the thermal isolation layer (3) is provided with an auxiliary fluid inlet (10) and an auxiliary fluid outlet (11), each being in communication with the heat exchange cavity (20).

5. Transporting pipeline according to any one of Claims 2 to 4, **characterized in that** the heat exchange base plate (1) is an arch, the transporting pipeline is arranged horizontally, the casing (22) of the transporting pipeline comprises a refractory layer at a lower half and the heat exchange apparatus at an upper half, the weight-bearing plates (2) of the heat exchange apparatus are pressed tightly against the refractory layer under the action of gravity, and a sealing refractory material (17) is used for sealing between the weight-bearing plates (2) and the refractory layer.

6. Transporting pipeline according to any one of Claims 2 to 4, **characterized in that** the heat exchange base plate (1) has multiple undulations, the transporting pipeline is arranged horizontally, the casing (22) of the transporting pipeline comprises a refractory layer at a lower half and the heat exchange apparatus at an upper half, a supporting structure is provided between the heat exchange base plate (1) and the weight-bearing plates (2) of the heat exchange apparatus, the weight-bearing plates (2) are pressed tightly against the refractory layer under the action of gravity, and a sealing refractory material (17) is used for sealing between the weight-bearing plates (2) and the refractory layer.

7. Transporting pipeline according to any one of Claims 2 to 6, **characterized in that** a number of the heat exchange apparatuses are arranged in the axial direction of the transporting pipeline, with the end faces (4) of the heat exchange apparatuses being tightly arranged against each other, and a sealing refractory material (17) being used for sealing between the end faces (4).

8. Transporting pipeline according to any one of Claims 5, 6 and 7, **characterized in that** the sealing refractory material (17) comprises one of ceramic fiber, glass fiber and refractory mortar, or a combination of more than one thereof.

9. A heat exchange apparatus suitable for use in the transporting pipeline according to Claim 1, **characterized in that** the heat exchange apparatus comprises a heat exchange base plate (1) in contact with the high-temperature fluid and a thermal isolation layer (3) in contact with an external environment, the thermal isolation layer (3) being connected to the heat exchange base plate (1) by two end faces (4) and two weight-bearing plates (2), wherein the heat exchange base plate (1), thermal isolation layer (3), end faces (4) and weight-bearing plates (2) enclose a hermetic heat exchange cavity (20), a heat-recovering fluid coil (12) being installed in the heat exchange cavity (20).

10. The heat exchange apparatus according to Claim 9, **characterized in that** the two end faces (4) are parallel, the thermal isolation layer (3) comprises an inner wall (14) and an outer wall (13), and the inner wall (14) of the thermal isolation layer (3) at least partially comprises a heat-reflecting plate (16).

11. The heat exchange apparatus according to Claim 9 or 10, **characterized in that** a thermal isolation material (15) is packed between the inner and outer walls (14, 13) of the thermal isolation layer (3) or a vacuum is maintained therebetween, the thermal isolation material (15) comprising insulation wool and/or perlite.

12. A method for using a high-temperature fluid in a transporting pipeline to heat a heat-recovering fluid, **characterized in that**:
a) at least a part of a casing (22) of the transporting pipeline is formed by a heat exchange apparatus, the heat exchange apparatus comprising a heat exchange base plate (1) in contact with the high-temperature fluid and a thermal isolation layer (3) in contact with an external environment, the thermal isolation layer (3) being connected to the heat exchange base plate (1) by two end faces (4) and two weight-bearing plates (2), wherein the heat exchange base plate (1), thermal isolation layer (3), end faces (4) and weight-bearing plates (2) enclose a hermetic heat exchange cavity (20), a heat-recovering fluid coil (12) being installed in the heat exchange cavity (20);
b) providing a heat-recovering fluid and an auxiliary fluid, wherein the heat-recovering fluid flows in the coil (12), the auxiliary fluid flows or is stationary in the heat exchange cavity (20), and the heat-recovering fluid is heated by the high-temperature fluid through heat conduction by the auxiliary fluid and heat radiation by the heat exchange base plate (1).

13. The method according to Claim 12, **characterized in that** the high-temperature fluid comprises flue gas generated by combustion and/or thermal cracking, the auxiliary fluid comprises one of air, N₂, CO₂ and steam or a combination of more than one thereof, and the heat-recovering fluid comprises O₂, natural gas or other fuel gases.

14. The method according to Claim 12, **characterized in that** the temperature range of the flue gas is 500 - 1200°C, and the outlet temperature range of the heat-recovering fluid is 300 - 600°C.

15. The method according to Claim 12, **characterized in that** the range of flow rates of the heat-recovering fluid is 5 - 100 m/s, preferably 20 - 60 m/s; and the range of flow rates of the auxiliary fluid is 0 - 50 m/s, preferably 20 - 30 m/s.
